# FASCICULE DE BREVET EUROPEEN

(11) **EP 0 759 833 B1**
(45) Date de publication et mention de la délivrance du brevet: **28.10.1998**
(21) Numéro de dépôt: 95920987.5
(22) Date de dépôt: 24.05.1995
(51) Int. Cl.: B23Q 9/00, B27G 5/02

(54) **DISPOSITIF DE GUIDAGE POUR APPAREIL ELECTROPORTATIF DE COUPE**
FÜHRUNGSVORRICHTUNG FÜR TRAGBARE ELEKTRISCHE SCHNEIDVORRICHTUNG
DEVICE FOR GUIDING A PORTABLE ELECTRIC CUTTING TOOL

(30) Priorité: 26.05.1994 FR 9406566
(43) Date de publication de la demande: 05.03.1997
(73) Titulaire: Polacek, Pierre, 31500 Toulouse (FR)
(72) Inventeur: Polacek, Pierre, 31500 Toulouse (FR)
(74) Mandataire: Morelle, Guy Georges Alain
(86) Numéro de dépôt international: FR9500684
(87) Numéro de publication internationale: WO9532837

(56) Documents cités:
- DE-C- 76 759
- FR-A- 355 182
- US-A- 3 320 982
- US-A- 4 909 111
- US-A- 4 966 507

## Description

La présente invention se rapporte aux dispositifs de guidage, pour appareil électroportatif de coupe, permettant d'effectuer en coopération avec ledit appareil électroportatif, une coupe suivant un plan de coupe droit ou de biais sur au moins une pièce à couper, par exemple un profilé, qui peut être composée de matériaux métalliques, de bois, de plastiques ou analogue.

L'Art Antérieur enseigne plusieurs dispositifs de guidage pour scie circulaire portative. On connait par exemple FR-A-2 609 422 qui décrit un dispositif comprenant une boîte en U à l'intérieur de laquelle on place la pièce à couper, la boîte comportant sur les flancs du U des échancrures permettant le passage de la lame de la scie, elle-même guidée par un support-guide en appui sur les sommets du U. Selon que l'on désire effectuer une coupe droite ou biaise à 45°, le support-guide de la scie est démonté, placé au dessus des échancrures désirées, puis remonté.

Un tel dispositif comporte quelques inconvénients. En effet, on notera le démontage et le remontage du support-guide chaque fois que l'on change d'angle de coupe, ce qui augmente le temps de préparation du dispositif avant la coupe, on notera également l'absence de moyens intégrés de serrage de la pièce à couper, rendant de ce fait l'opération de coupe plus délicate. Il faut d'autre part relever qu'un tel dispositif ne permet pas la coupe simultanée, c'est à dire en un seul passage de la scie, des deux éléments complémentaires d'un assemblage de pièces de section quelconque, et ne permet pas non plus une coupe biaise suivant un angle quelconque.

Un dispositif de guidage selon le préambule de la revendication 1 est décrit dans la demande de FR-A-2 401 748. Ce dispositif pour scie à moteur portable comprend une plaque-support sur laquelle on place la pièce à couper en appui latéral contre une butée servant à positionner la pièce de façon à effectuer une coupe suivant un angle désiré quelconque. La plaque-support comporte des colonnes de soutien de deux rails de guidage pour un support mobile sur lequel est fixée la scie.

Ce dispositif présente notamment les inconvénients, de ne pas permettre la coupe simultanée des deux éléments complémentaires d'un assemblage de pièces de section quelconque, de ne pas comporter de moyen intégré de serrage de la pièce à couper, et de proposer un moyen complexe de support et de guidage de la scie, en particulier dans la mesure où celui-ci demande un ajustement du support mobile dans le ou les rails de guidage.

La présente invention se propose de pallier ces inconvénients et d'apporter notamment d'autres avantages. Plus précisément, elle consiste en un dispositif de guidage, pour appareil électroportatif de coupe, permettant d'effectuer en coopération avec ledit appareil électroportatif, une coupe suivant un plan de coupe droit ou de biais sur au moins une pièce à couper, ladite coupe étant assurée par un déplacement dudit appareil électroportatif, ledit dispositif de guidage comprenant :
des premiers moyens de support pour supporter ladite pièce à couper,
des moyens de guidage latéral pour guider ledit appareil électroportatif durant son déplacement,
des deuxièmes moyens de support, pour supporter ledit appareil électroportatif durant ledit déplacement,
caractérisé en ce que ledit dispositif comprend au moins un volume rigide dont une première partie latérale porte des premiers moyens de positionnement de ladite pièce à couper et forme un angle droit par rapport au dit plan de coupe, et dont une deuxième partie latérale porte des deuxièmes moyens de positionnement de ladite pièce à couper et forme un angle de positionnement supérieur à 0° et inférieur à 90° par rapport au dit plan de coupe,
et en ce que ledit volume rigide comprend une partie supérieure constituant lesdits deuxièmes moyens de support au moins de façon partielle,
ledit plan de coupe étant situé à l'extérieur dudit volume rigide,
lesdits deuxièmes moyens de support étant fixes pendant ledit déplacement dudit appareil électroportatif et discontinus sur la longueur dudit déplacement.

La discontinuité des deuxièmes moyens de support permet de placer la pièce à couper entre les deuxièmes moyens de support discontinus, et de bénéficier ainsi des mêmes éléments, c'est à dire d'au moins un volume rigide, pour à la fois positionner la pièce à couper selon un angle droit ou compris entre 0° et 90°, par exemple 45°, et supporter l'appareil électroportatif durant son déplacement sur les deuxièmes moyens de support.

La pièce à couper est ainsi supportée par les premiers moyens de support, placée en appui latéral sur les premier ou deuxième moyens de positionnement constitués d'une première ou deuxième partie latérale du volume rigide respectivement, ou des parties latérales de deux volumes rigides adjacents, et l'appareil électroportatif est supporté durant son déplacement par les deuxièmes moyens de support constitués d'une partie supérieure du ou des volumes rigides. L'appareil électroportatif est guidé latéralement dans son déplacement de coupe, effectué par un utilisateur, par les moyens de guidage latéral. L'appareil électroportatif utilisé peut être par exemple une scie circulaire portable, ou une scie sauteuse à lame rectiligne, celles-ci pouvant avantageusement être munies de tout disque ou lame coupants adaptés au matériau à couper.

Selon une autre caractéristique avantangeuse, le dispositif de guidage suivant l'invention comprend des moyens de fixation libérable dudit volume rigide sur lesdits premiers moyens de support, et selon une autre caractéristique avantageuse, le dispositif de guidage suivant l'invention comprend des premiers moyens de réglage de la position de fixation dudit volume rigide sur lesdits premiers moyens de support.

Les premiers moyens de réglage de la position de fixation du volume rigide sur les premiers moyens de support permettent avantageusement d'utiliser les parties latérales de deux volumes rigides adjacents pour positionner la pièce à couper. De ce fait, la pièce à couper se trouve parfaitement maintenue et immobilisée latéralement entre deux volumes rigides adjacents, qui constituent ainsi un obstacle s'opposant à l'effort de coupe de l'appareil électroportatif.

Dans le cas de la présence de plusieurs volumes rigides permettant de placer plusieurs pièces à couper simultanément entre les volumes sur le dispositif de guidage selon l'invention, les premiers moyens de réglage de la position de fixation des volumes sur les premiers moyens de support permettent avantageusement d'optimiser la discontinuité des deuxièmes moyens de support. En effet, cette discontinuité est rendue minimale en rapprochant les volumes adjacents jusqu'à ce qu'ils soient en contact entre eux ou avec la ou les pièces à couper.

Selon une autre caractéristique avantageuse, le dispositif de guidage selon l'invention comprend des moyens de serrage pour lier de façon rigide démontable ladite pièce à couper au dit dispositif.

De cette façon, un utilisateur peut effectuer une coupe sans se préoccuper du maintien en position de la pièce à couper sur le dispositif de guidage selon l'invention, et sans risquer un déplacement intempestif de la pièce à couper durant la coupe.

L'invention sera mieux comprise et d'autres caractéristiques et avantages apparaîtront à la lecture de la description qui suit de plusieurs exemples de mode de réalisation d'un dispositif de guidage selon l'invention, accompagnée des dessins annexés, exemples donnés à titre d'illustration.

La Figure 1 représente en vue de dessus un premier mode de réalisation d'un dispositif de guidage selon l'invention.

La Figure 2 représente une coupe suivant la ligne I-I de la Figure 1.

La Figure 3 représente une coupe suivant la ligne I'-I' de la Figure 1.

La Figure 4 représente une coupe partielle agrandie suivant la ligne I''-I'' de la Figure 1.

La Figure 5 représente en vue de dessus un deuxième mode de réalisation d'un dispositif de guidage selon l'invention.

La Figure 6 représente en vue de dessus un deuxième mode de réalisation d'un dispositif de guidage selon l'invention, dans une autre configuration.

La Figure 7 représente une coupe suivant la ligne II-II de la Figure 6.

La Figure 8 représente en vue de dessus un troisième mode de réalisation d'un dispositif de guidage selon l'invention.

La Figure 9 représente une vue suivant F agrandie de la Figure 8.

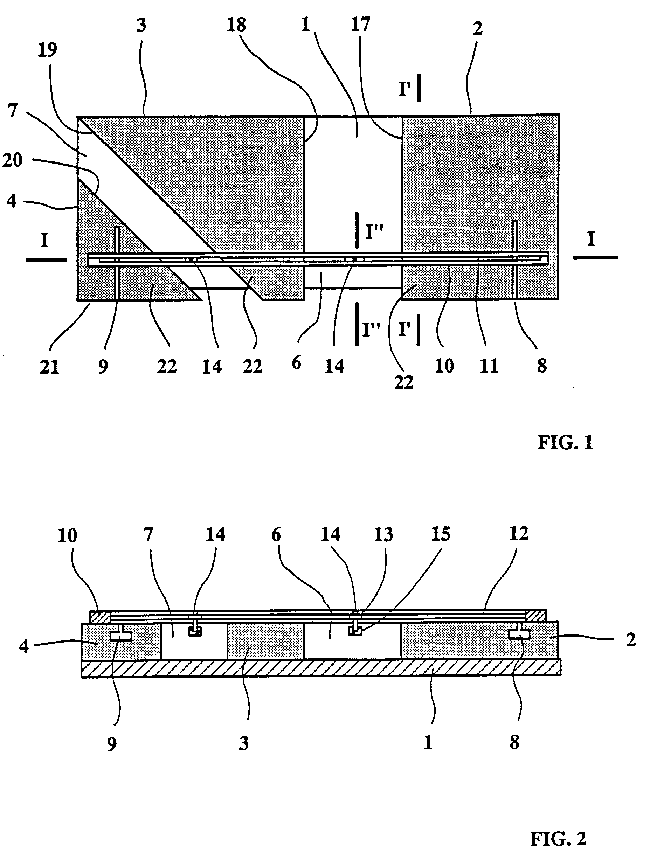

Sur les Figures 1 et 2, le dispositif de guidage comprend une plaque 1 rectangulaire portant trois volumes 2, 3, 4 rigides. Les volumes 2, 3, 4 sont placés sur la plaque 1 de façon à, coïncider avantageusement avec le pourtour de la plaque 1, et former avantageusement deux logements respectifs 6 et 7, comme le représente la Figure 1, qui sont aptes à recevoir la ou les pièces à couper. Le volume 4 possèdent avantageusement une base en forme de triangle rectangle, Le volume 3 avantageusement une base en forme de trapèze, et le volume 2 avantageusement une base en forme de rectangle, les trois volumes ayant une hauteur égale et légèrement inférieure à la hauteur de coupe des appareils électroportatifs de coupe auxquels le dispositif de guidage est destiné.

Le logement 6 de section en U montré sur la Figure 2 est formé des parties latérales 17 et 18 respectivement des volumes 2 et 3, pour les parties montantes du U, et de la plaque 1 pour la base du U. Les surfaces des parties latérales 17 et 18 qui sont planes et utilisées comme moyens de positionnement de la ou des pièces à couper, sont avantageusement perpendiculaires à la surface supérieure de la plaque 1 et sont perpendiculaires au bord 21 défini par les volumes 2, 3, 4. La partie de la plaque 1 servant de base du U est utilisée pour supporter la ou les pièces à couper. Le logement 6 permet de réaliser des coupes droites ou des coupes biaises comme cela sera indiqué ci-après.

Le logement 7, également de section en U est formé des parties latérales 19 et 20 respectivement des volumes 3 et 4, pour les parties montantes du U, et de la plaque 1 pour la base du U. Les surfaces des parties latérales 19 et 20, qui sont planes et utilisées comme moyens de positionnement de la ou des pièces à couper, sont avantageusement perpendiculaires à la surface supérieure de la plaque l et forment un angle égal à 45° avec le bord 21. La partie de la plaque 1 servant de base du U est utilisée pour supporter la ou les pièces à couper. Le logement 7 permet de réaliser des coupes biaises comme cela sera indiqué ci-après.

Le dispositif de guidage représenté sur les Figures 1 et 2 comprend un rail 10, avantageusement métallique pour assurer le guidage latéral de l'appareil électroportatif durant son déplacement. Le rail 10 est constitué d'un profilé de section par exemple carrée ou rectangulaire, et est fixé par ses deux extrémités sur la partie supérieure des volumes 2 et 4, de manière rigide et démontable. La fixation du rail est assurée selon tous moyens connus, par exemple par deux boulons en T (non représentés) traversant le rail 10 à ses extrémités. Afin de permettre le réglage de la position de fixation du rail 10 par rapport au bord 21, on a réalisé deux rainures 8 et 9 en T dans les volumes 2 et 4, dans lesquelles peuvent coulisser les boulons en T (non représentés) de fixation du rail. Les deux rainures 8 et 9 en T sont perpendiculaires au bord 21 afin de permettre un réglage de la position du rail 10 parallèlement au bord 21.

Les rainures 8 et 9 en T peuvent avantageusement être graduées de façon visible sur leur longueur respective afin de faciliter le positionnement parallèle du rail 10 par rapport au bord 21.

Le rail 10 est avantageusement muni d'au moins une lumière 11 longitudinale le traversant afin de permettre une liaison et un réglage du positionnement des moyens de serrage de la ou des pièces à couper. A cet effet, la lumière 11 est formée tout au long du rail 10 ou partiellement au moins au dessus des logements 6 et 7, ceci quelle que soit la position du rail par rapport au bord 21.

Il est à noter que la lumière 11 peut être utilisée pour le passage des deux boulons (non représentés) pour la fixation du rail 10 sur les volumes 2 et 4.

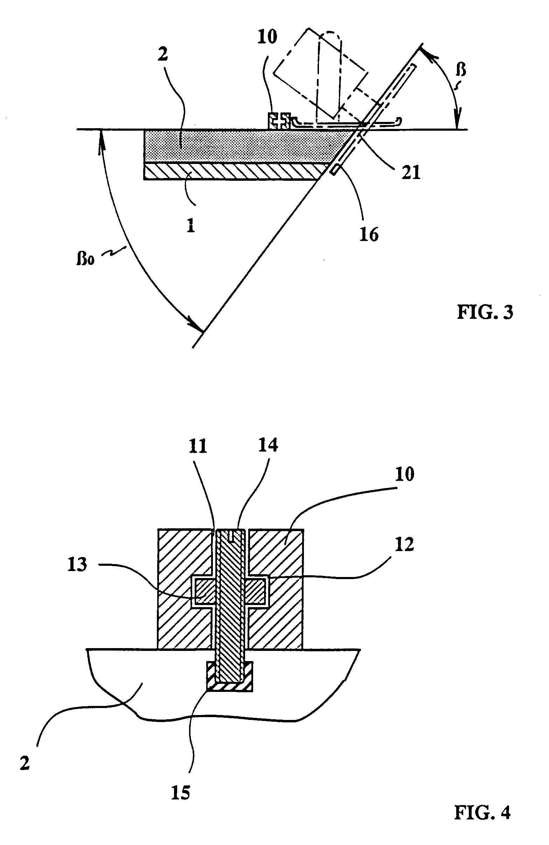

Les Figures 2 et 4 montrent les moyens de serrage de la ou des pièces à couper. Le serrage de celles-ci est assuré par l'intermédiaire d'au moins un écrou 13, par exemple de section carré, coulissant dans une rainure 12 réalisée dans la lumière 11, comme le représente la Figure 4, dans lequel est vissé une vis 14, par exemple une vis sans tête. L'extrémité de la vis 14 appuyant sur la pièce à couper peut être munie d'un embout 15 en matière plastique ou analogue, avantageusement maintenu sur la vis par frottement et démontable, afin de ne pas marquer la pièce à couper lors du serrage. Le rail 10 peut être formé selon tout moyen connu, par exemple en plusieurs parties assemblées de manière rigide et non démontable.

Le dispositif de guidage selon l'invention comprend avantageusement un jeu de vis de longueur différente interchangeables pour le serrage de la ou des pièces à couper en fonction de sa hauteur. En effet, l'objectif d'un tel jeu de vis est de permettre le serrage de n'importe quelle hauteur de pièce à couper inférieure à la hauteur des volumes 2, 3, 4 sans que l'extrémité supérieure de la vis ne soit sensiblement plus haute que la surface supérieure du rail 10, ceci afin de ne pas faire obstacle au déplacement de l'appareil électroportatif pendant la coupe. Le jeu de vis peut comprendre par exemple toutes les vis entre 10 mm et une longueur légèrement supérieure à la hauteur des volumes rigides, avec des longueurs étagées de 5 mm en 5 mm.

La partie supérieure 22 des volumes 2, 3, et 4 comprise entre le bord 21 et le rail 10 sert au support de l'appareil électroportatif de coupe durant son déplacement de coupe. On notera ainsi que les moyens de support formés par la partie supérieure 22 des trois volumes 2, 3, et 4 sont discontinus sur la longueur du déplacement de coupe car interrompus par les logements 6 et 7.

Il faut remarquer que les volumes 2, 3, et 4 rigides du dispositif de guidage représenté sur les Figures 1 et 2 peuvent être réalisés d'un seul bloc avec la plaque 1, ou séparément de celle-ci et fixés de manière rigide non démontable, par exemple par collage, ou avantageusement démontable, par exemple par vis (non représenté).

Dans le cas où les volumes 2, 3, et 4 rigides sont liés de manière démontable sur la plaque 1, on pourra utiliser tout moyen connu de positionnement des volumes par rapport a la plaque 1, par exemple des pions de positionnement (non représentés), de façon à respecter la position initiale prévue des surfaces latérales 17, 18, 19, 20 lors du montage. Chaque volume respectif est dans ce cas avantageusement monobloc.

Les volumes 2, 3, et 4 rigides peuvent être réalisés dans un matériau choisi parmi les suivants : bois, métaux, alliages métalliques, matières plastiques ou analogue. La plaque 1 sera de préférence en alliage métallique léger. La plaque 1 et les volumes 2, 3, 4 seront pleins ou évidés selon les matériaux choisis afin d'alléger le dispositif selon l'invention.

Le dispositif de guidage peut comprendre une pluralité de pieds (non représentés), par exemple quatre dont un réglable en hauteur selon tout moyen connu, fixés sous la plaque 1, afin de surélever la plaque 1 au dessus du sol, et/ou tout moyen connu de pattes de fixation ou de trous (non représentés) afin de brider le dispositif par exemple sur une table de travail. Dans le cas d'une utilisation de table de travail (non représenté), la surface supérieure de celle-ci peut remplir les fonctions de la plaque 1, les volumes rigides étant directement liés à la table de travail.

Il est à noter que le dispositif de guidage selon l'invention représenté sur les Figures 1 et 2 peut comporter plusieurs jeux d'une hauteur différente de volumes rigides interchangeables, dans le cas où ces derniers sont démontables, afin d'obtenir une hauteur de coupe par le remplacement du jeu de volumes, adaptée à la ou les pièces à couper et à la hauteur de coupe de l'appareil électroportatif de coupe utilisé en coopération avec le dispositif.

Le dispositif selon l'invention peut de façon alternative, comporter plusieurs volumes rigides interchangeables de formes différentes permettant de former d'autres logements pour pièces à couper différents de ce représentés sur les Figures 1 et 2. Par exemple, les volumes rigides peuvent permettre des coupes biaises selon un angle de 30° ou de 60°.

Un mode d'utilisation du dispositif de guidage représenté sur les Figures 1 et 2 est le suivant :
l'utilisateur règle la position du rail 10 de guidage par rapport au bord 21, en fonction de l'appareil électroportatif de coupe dont il dispose, le plan de coupe devant être parallèle au bord 21 et situé à l'extérieur de la plaque 1. Pour cette opération, l'utilisateur pourra par exemple placer l'appareil électroportatif en appui sur la surface supérieure d'au moins un volume rigide, et le maintenir en appui latéral contre le rail 10 de façon que la lame de coupe tangente sensiblement le bord 21. Le rail 10 étant positionné, il peut alors être immobilisé au moyen des boulons en T. Il est à noter que l'utilisateur peut également effectuer le positionnement du rail 10 au moyen des règles graduées ou d'un simple instrument de mesure, par exemple un mètre ;
l'utilisateur place la ou les pièces à couper dans le ou les logements 6, 7, en appui avantageusement sur les surfaces latérales 17 et/ou 19, selon qu'il veut réaliser une coupe droite et/ou biaise à 45° respectivement; la ou les pièces à couper sont ensuite serrées au moyen de la ou des vis 14 appropriées ;
l'utilisateur effectue la coupe en déplaçant l'appareil électroportatif sur la surface supérieure des volumes en appui contre le rail de guidage ;
il est à noter que le dispositif de guidage selon l'invention peut permettre de réaliser également des coupes biaises selon un angle β quelconque donné par l'inclinaison du plan de coupe de l'appareil de coupe par rapport à son plan d'appui, comme le représente la Figure 3, dans laquelle on a illustré une scie circulaire électroportative en trait mixte fin. A cet effet, le champ 16 du dispositif du côté du bord 21 et la surface supérieure des volumes rigides forment un angle β₀, par exemple égal à 45° pour assurer le dégagement de la lame de l'appareil pendant la coupe.

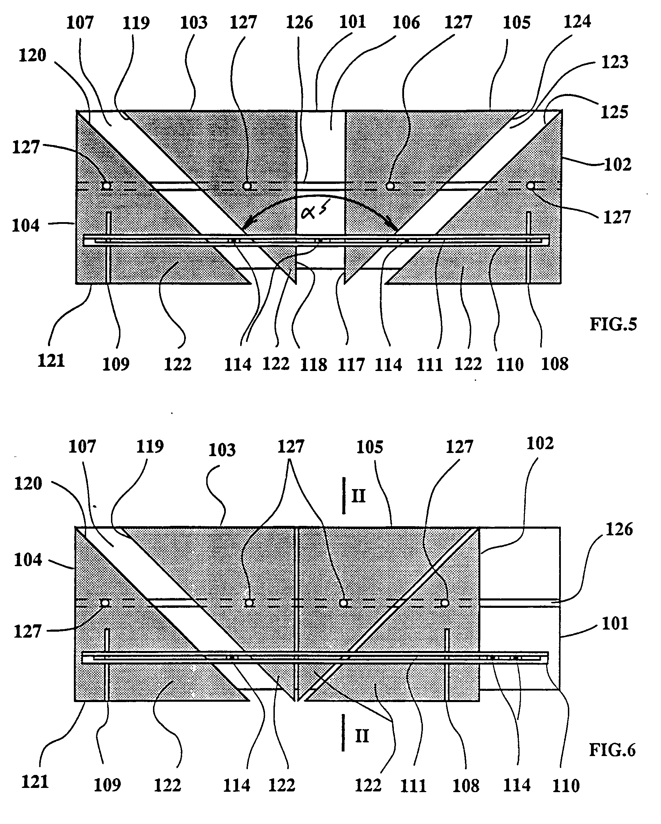

Dans le deuxième mode de réalisation d'un dispositif de guidage selon l'invention représenté sur les Figures 5 à 7, les éléments similaires à ceux du dispositif représenté sur les Figures 1 à 4 portent les mêmes références numériques additionnées du nombre 100.

Le deuxième mode de réalisation d'un dispositif de guidage selon l'invention représenté sur les Figures 5 à 7 reprend le concept de base du dispositif représenté sur les Figures 1 à 4, et se différencie essentiellement de ce dernier par la présence de moyens de réglage de la position de fixation des volumes rigides sur la plaque 101, et par la présence d'un logement supplémentaire pour pièces a couper.

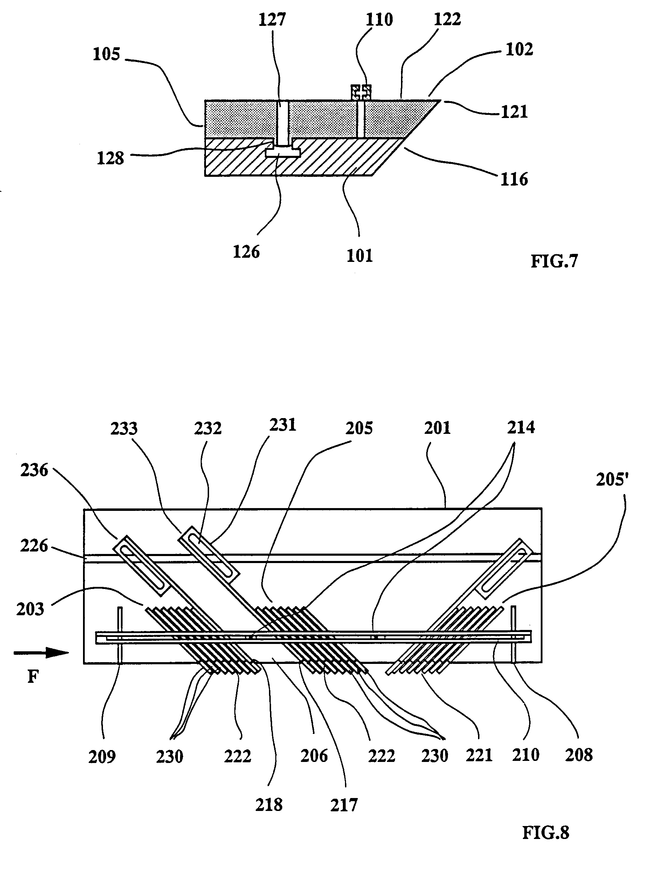

Les volumes 102, 103, 104, 105 possèdent chacun, sur leur face en contact avec la plaque 101, un épaulement 128, comme représenté sur la Figure 7, qui assure un angle de positionnement des surfaces latérales 117, 118, 119, 120, 124, 125 par rapport au bord 121 défini par les volumes 102, 103, 104, 105, identique quelle que soit la position des volumes sur la plaque 101. A cet effet, la plaque 101 possède une rainure 126 en T parallèle au bord 121, dans laquelle s'emboîtent les épaulements 128 des volumes rigides.

Chaque volume possède au moins un trou 127 servant à sa fixation sur la plaque 101, par l'intermédiaire d'un boulon en T (non représenté) coulissant dans la rainure 126 en T et traversant le trou 127.

La caractéristique de réglage de la position de fixation des volumes rigides sur la plaque 101 permet avantageusement de maintenir latéralement une ou plusieurs pièces à couper dans les logements 106, 107, 123, respectivement entre les surfaces latérales 117 et 118, 119 et 120, 124 et 125. La Figure 6 montre un exemple de configuration possible du dispositif représenté sur la Figure 5. Sur la Figure 6, seul le logement 107 est utilisé, la pièce à couper étant maintenue entre les surfaces latérales 119 et 120. Cette caractéristique permet également d'optimiser la continuité de la surface supérieure 122 des volumes rigides servant de moyen de support de l'appareil électroportatif, en autorisant une discontinuité sensible minimale de la surface supérieure 122 au niveau du logement 107. Sur la Figure 6, les volumes 102, 103, et 105 peuvent être jointifs en retirant, le cas échéant, les vis 114 de serrage.

La lumière 111 dans le rail 110 permet le déplacement des volumes 102 et 104 d'extrémité.

Il est à noter que les volumes 103 et/ou 105 peuvent comporter une rainure en T semblable à la rainure 108 ou 109 respectivement des volumes 102 ou 104, afin d'assurer un ou des points de fixation supplémentaires du rail 110. Ce mode de réalisation n'est pas représenté sur les Figures 5, 6.

Le logement 106 recevant la ou les pièces à couper est perpendiculaire au bord 121 et permet les coupes droites, et avantageusement biaises par l'intermédiaire de l'inclinaison de la lame de l'appareil de coupe, le cas échéant, comme déjà dit plus haut.

Les logements 107 et 123 forment chacun respectivement un angle de 45° avec le bord 121 et forment entre eux un premier angle α égal à 90°, et permettent les coupes biaises d'au moins deux pièces d'un assemblage suivant un deuxième angle supplémentaire dudit premier angle α, en un seul déplacement de l'appareil électroportatif. Par exemple, sur la Figure 5, α étant égal à 90°, un utilisateur peut réaliser en un seul déplacement de l'appareil, les coupes a 45° de deux côtés attenant d'un cadre à angles droits, en plaçant chacun des côtés respectivement dans chacun des logements 107 et 123. Cette caractéristique est très avantageuse pour la réalisation de cadre à moulures par exemple, dans la mesure où le profil de baguette de cadre ne permet un appui plan que sur une des faces de la baguette.

Comme représenté sur la Figure 7, le dispositif selon l'invention comporte un champ 116 en biais pour permettre les coupes biaises en fonction de l'inclinaison du plan de coupe de l'appareil de coupe, comme cela a été détaillé plus haut avec la description du premier mode de réalisation d'un dispositif selon l'invention.

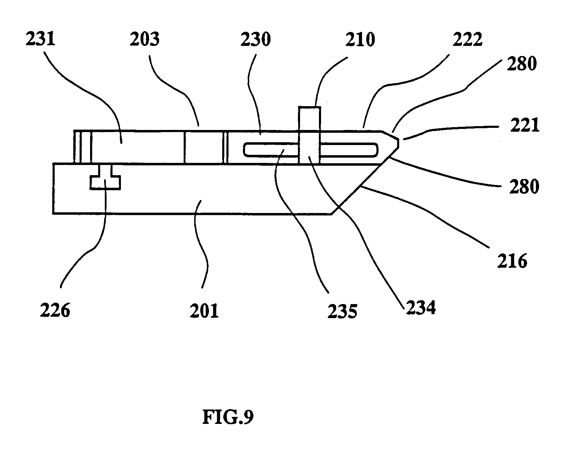

Dans le troisième mode de réalisation d'un dispositif de guidage selon l'invention représenté sur les Figures 8 et 9, les éléments similaires à ceux du dispositif représenté sur les Figures 5 à 7 portent les mêmes références numériques additionnées du nombre 100.

Le troisième mode de réalisation d'un dispositif de guidage selon l'invention représenté sur les Figures 8 et 9 reprend le concept de base du dispositif représenté sur les Figures 5 à 7, et se différencie essentiellement de ce dernier par des volumes rigides 203, 205 comprenant chacun une pluralité d'éléments rigides 230, 236 et 233 respectivement, fixés entre eux de manière libérable pour permettre un changement de forme des volumes rigides de façon indépendante.

Le dispositif de guidage représenté sur la Figure 8, comprend deux volumes 203 et 205 rigides comprenant chacun par exemple six cales 230 rectangulaires, dans chacune desquelles on a réalisé une lumière longitudinale 235, comme représenté sur la Figure 9, et comprenant chacun une cale 236 et 233 respectivement.

Les cales 236 et 233 comportent également chacune une lumière longitudinale 235, pour assurer le passage d'au moins un boulon (non représenté) transversal de liaison de l'ensemble des cales composant un volume, et comportent chacune une pièce 231 de liaison à la plaque 201. Chaque pièce 231 de liaison est liée rigidement à sa cale respective, selon tout moyen connu, par exemple par soudage dans le cas d'utilisation de matériaux métalliques. Les pièces 231 possèdent chacune une lumière 232 permettant d'assurer la liaison rigide démontable des volumes à la plaque 201, au moyen d'un boulon en T (non représenté) traversant la lumière 232 et coulissant dans la rainure 226.

Les pièces 231 sont placées du côté des cales 230 pour chaque volume afin d'obtenir un logement 206 pour la pièce à couper présentant des surfaces latérales 217 et 218 d'une longueur appropriée, comme le montre la Figure 8.

Il est à noter que le ou les boulons transversaux (non représentés) de serrage de l'ensemble des cales composant le volume 203 ou 205 a sa tête encastrée dans la cale d'extrémité 236 ou 232 afin que les surfaces latérales 218 et 217 ne présentent pas d'aspérité pour un bon positionnement de la ou des pièces à couper.

Le rail de guidage 210 est fixé à la plaque 201 en appui sur deux entretoises 234 de la même hauteur que les volumes 203 et 205, les rainures 208 et 209 en T étant réalisées dans la plaque 201.

On remarquera que les volumes 203 et 205 disposent avantageusement de chanfreins 280 symétriques, le chanfrein inférieur étant aligné avec le bord en biais du support 201 pour former un champ 216 en biais sur le dispositif selon l'invention, comme le représente la Figure 9, afin d'assurer le dégagement de la lame de l'appareil pendant une coupe biaise comme déjà décrit plus haut. L'intérêt essentiel des chanfreins symétriques est de pouvoir permettre le retournement des volumes sur le support, et de rendre avantageusement les volumes 203 et 205 interchangeables.

Un mode de fonctionnement du dispositif représenté sur les Figures 8 et 9 est le suivant :
l'utilisateur déforme les volumes 203 et 205, après avoir desserré les boulons transversaux (non représentés) de fixations des cales de chaque volume et desserré les boulons en T (non représentés) de fixation des volumes sur la plaque 201, de façon à ce que les surfaces latérales 217 et 218 présentent l'inclinaison correspondante à l'angle de coupe désiré. A cet effet, le dispositif peut avantageusement être muni de tout moyen de mesure angulaire permettant de mesurer l'inclinaison les surfaces latérales. Par exemple, ce moyen de mesure angulaire peut être un genre de rapporteur (non représenté) avantageusement fixé ou intégré sur le support 201. La référence 205' en trait fin représente le volume 205 dans une autre configuration de réglage. Après avoir fixé les volumes dans leur configuration de coupe au moyen des boulons, l'utilisateur effectue alors les opérations déjà indiquées plus haut.

Il est à noter que la longueur des lumières 232 est adaptée aux possibilités de réglage angulaire que l'on désire obtenir pour les cales 233 et 236, compte tenu de la fixation de ces dernières par l'intermédiaire de boulons en T placé dans la rainure 226.

Le dispositif représenté sur les Figures 8 et 9 permet, avec le même jeu de volumes rigides, des coupes droites ou biaises selon un angle quelconque limité uniquement par les possibilités de déformation des volumes, pour une ou plusieurs pièces à couper en un seul déplacement de l'appareil de coupe.

## Revendications

1. Dispositif de guidage, pour appareil électroportatif de coupe, permettant d'effectuer en coopération avec ledit appareil électroportatif, une coupe suivant un plan de coupe droit ou de biais sur au moins une pièce à couper, ladite coupe étant assurée par un déplacement dudit appareil électroportatif, ledit dispositif de guidage comprenant :
des premiers moyens de support (1, 101) pour supporter ladite pièce à couper,
des moyens de guidage latéral (10, 110) pour guider ledit appareil électroportatif durant son déplacement,
des deuxièmes moyens de support, pour supporter ledit appareil électroportatif durant ledit déplacement,
***caractérisé en ce que*** ledit dispositif comprend au moins un volume rigide (3, 103) dont une première partie latérale (18; 118) porte des premiers moyens de positionnement de ladite pièce à couper et forme un angle droit par rapport au dit plan de coupe, et dont une deuxième partie latérale (19, 119) porte des deuxièmes moyens de positionnement de ladite pièce à couper et forme un angle de positionnement supérieur à 0° et inférieur à 90° par rapport au dit plan de coupe,
et en ce que ledit volume rigide comprend une partie supérieure (22, 122) constituant lesdits deuxièmes moyens de support au moins de façon partielle,
ledit plan de coupe étant situé à l'extérieur dudit volume rigide,
lesdits deuxièmes moyens de support étant fixes pendant ledit déplacement dudit appareil électroportatif et discontinus sur la longueur dudit déplacement.

2. Dispositif de guidage suivant la revendication 1, ***caractérisé en ce que*** ledit angle de positionnement est égal à 45°.

3. Dispositif de guidage suivant la revendication 1 ou 2, ***caractérisé en ce que*** ledit volume rigide (203) comprend une pluralité d'éléments rigides (230) fixés entre eux de manière libérable pour permettre d'obtenir ladite première partie latérale ou ladite deuxième partie latérale par un changement de forme dudit volume rigide.

4. Dispositif de guidage suivant l'une quelconque des revendications 1 à 3, ***caractérisé en ce qu***'il comprend des moyens (127, 232) de fixation libérable dudit volume rigide (103, 203) sur lesdits premiers moyens (101, 201) de support.

5. Dispositif de guidage suivant la revendication 4, ***caractérisé en ce qu***'il comprend des premiers moyens (126, 226) de réglage de la position de fixation dudit volume rigide (103, 203) sur lesdits premiers moyens (101, 201) de support.

6. Dispositif de guidage suivant l'une quelconque des revendications 1 à 5, ***caractérisé en ce qu***'il comprend au moins deux volumes rigides (103, 105) dont lesdites deuxièmes parties latérales (119, 124) respectives forment un premier angle (α) supérieur à 0° et inférieur à 180°, pour permettre d'effectuer une coupe d'au moins deux pièces d'un assemblage suivant un deuxième angle supplémentaire dudit premier angle (α), en un seul déplacement dudit appareil électroportatif.

7. Dispositif de guidage suivant la revendication 6, ***caractérisé en ce que*** ledit premier angle (α) est égal à 90°.

8. Dispositif de guidage suivant l'une quelconque des revendications 1 à 7, ***caractérisé en ce que*** lesdits moyens de guidage latéral comprennent un rail (10, 110, 210) placé sur ladite partie supérieure (22, 122, 222) dudit volume rigide (3, 103, 203) portant lesdits deuxièmes moyens de support.

9. Dispositif de guidage suivant l'une quelconque des revendications 1 à 8, ***caractérisé en ce qu***'il comprend des moyens (14, 114, 214) de serrage pour lier de façon rigide démontable ladite pièce à couper au dit dispositif.

10. Dispositif de guidage suivant la revendication 9, ***caractérisé en ce que*** lesdits moyens (14, 114, 214) de serrage sont solidaires desdits moyens (10, 110, 210) de guidage latéral.

11. Dispositif de guidage suivant l'une quelconque des revendications 1 à 10, ***caractérisé en ce qu***'il comprend des deuxièmes moyens (8, 9, 108, 109, 208, 209) de réglage pour positionner lesdits moyens (10, 110, 210) de guidage latéral de façon que ledit plan de coupe soit au moins parallèle, et au plus tangent à un bord (21, 121, 221) desdits deuxièmes moyens de support, et soit placé à l'extérieur desdits premiers moyens (1, 101, 201) de support.

12. Dispositif de guidage suivant l'une quelconque des revendications 1 à 11, ***caractérisé en ce qu***'il comprend un champ (16, 116, 216) en biais.

## Claims

1. Guiding device for portable electrical cutting apparatus, allowing a cut to be made, in co-operation with the said portable electrical apparatus, in a straight or slanting cutting plane in at least one piece to be cut, the said cut being provided by displacement of the said portable electrical apparatus, the said guiding device comprising:
first support means (1, 101) to support the said piece to be cut,
lateral guiding means (10, 110) to guide the said portable electrical apparatus during its displacement,
second support means to support the said portable electrical apparatus during the said displacement,
*characterised by the fact that* the said device comprises at least one rigid volume (3, 103) of which a first lateral part (18, 118) carries first means for positioning the said piece to be cut and forms a right angle with the said cutting plane, and of which a second lateral part (19, 119) carries second means for positioning the said piece to be cut and forms a positioning angle greater than 0° and less than 90° with the said cutting plane,
and by the fact that the said rigid volume comprises an upper part (22, 122) at least partially constituting the said second support means,
the said cutting plane being situated outside the said rigid volume,
the said second support means being fixed during the said displacement of the said portable electrical apparatus and discontinuous over the length of the said displacement.

2. Guiding device as described in claim 1, *characterised by the fact that* the said positioning angle is equal to 45°.

3. Guiding device as described in claim 1 or 2, *characterised by the fact that* the said rigid volume (203) comprises a plurality of rigid elements (230) freely fixed together to allow the said first lateral part or the said second lateral part to be obtained by a change of shape of the said rigid volume.

4. Guiding device as described in any one of claims 1 to 3, *characterised by the fact that* it comprises means (127, 232) for freely fixing the said rigid volume (103, 203) on the said first support means (101, 201).

5. Guiding device as described in claim 4, *characterised by the fact that* it comprises first means (126, 226) for adjusting the fixing position of the said rigid volume (103, 203) on the said first support means (101, 201).

6. Guiding device as described in any one of claims 1 to 5, *characterised by the fact that* it comprises at least two rigid volumes (103, 105) of which the respective said second lateral parts (119, 124) form a first angle (α) greater than 0° and less than 180° to allow cutting of at least two pieces of an assembly at a second angle supplementary to the said first angle (α), at one single displacement of the said portable electrical apparatus.

7. Guiding device as described in claim 6, *characterised by the fact that* the said first angle (α) is equal to 90°.

8. Guiding device as described in any one of claims 1 to 7, *characterised by the fact that* the said lateral guiding means comprise a rail (10, 110, 210) placed on the said upper part (22, 122, 222) of the said rigid volume (3, 103, 203) carrying the said second support means.

9. Guiding device as described in any one of claims 1 to 8, *characterised by the fact that* it comprises clamping means (14, 114, 214) to rigidly removably attach the said piece to be cut to the said device.

10. Guiding device as described in claim 9, *characterised by the fact that* the said clamping means (14, 114, 214) are firmly attached to the said lateral guiding means (10, 110, 210).

11. Guiding device as described in any one of claims 1 to 10, *characterised by the fact that* it comprises second adjustment means (8, 9, 108, 109, 208, 209) for positioning the said lateral guiding means (10, 110, 210) so that the said cutting plane is at least parallel, and at most tangential to an edge (21, 121, 221) of the said second support means, and is placed outside the said first support means (1, 101, 201).

12. Guiding device as described in any one of claims 1 to 11, *characterised by the fact that* it comprises a slanting edge (16, 116, 216).

## Patentansprüche

1. Führungseinrichtung für elektroportatives Schneidegerät, die gestattet, im Zusammenwirken mit dem elektroportativen Gerät einen Schnitt entlang einer geraden oder schiefen Schnittebene an mindestens einem zu schneidenden Teil auszuführen, wobei der Schnitt durch eine Verlagerung des elektroportativen Geräts gewährleistet wird, wobei die Führungseinrichtung umfaßt:
- Erste Haltemittel (1, 101), um das zu schneidende Teil zu halten,
- Mittel (10, 110) zur seitlichen Führung, um das elektroportative Gerät während seiner Verlagerung zu führen,
- zweite Haltemittel, um das elektroportative Gerät während seiner Verlagerung zu halten,
dadurch gekennzeichnet, daß die Einrichtung mindestens ein starres Volumen (3, 103) umfaßt, dessen erster seitlicher Abschnitt (18, 118) erste Mittel zur Positionierung des zu schneidenden Teils trägt und einen rechten Winkel bezogen auf die Schnittebene bildet, und dessen zweiter seitlicher Abschnitt (19, 119) zweite Mittel zur Positionierung des zu schneidenden Teils trägt und einen Positionierungswinkel größer als 0° und kleiner als 90° bezogen auf die Schnittebene bildet,
und daß das starre Volumen einen oberen Abschnitt (22, 122) umfaßt, welcher die zweiten Haltemittel zumindest teilweise bildet,
wobei die Schnittebene außerhalb des starren Volumens liegt,
wobei die zweiten Haltemittel wahrend der Verlagerung des elektroportativen Geräts feststehend und auf der Länge der Verlagerung diskontinuierlich sind.

2. Führungseinrichtung nach Anspruch 1,
dadurch gekennzeichnet, daß der Positionierungswinkel gleich 45° beträgt.

3. Führungseinrichtung nach Anspruch 1 oder 2,
dadurch gekennzeichnet, daß das starre Volumen (203) eine Vielzahl starrer Elemente (230) umfaßt, die aneinander lösbar befestigt sind, um zu gestatten, den ersten seitlichen Abschnitt oder den zweiten seitlichen Abschnitt durch eine Formänderung des starren Volumens zu erhalten.

4. Führungseinrichtung nach einem der Ansprüche 1 bis 3,
dadurch gekennzeichnet, daß sie Mittel (127, 232) zur lösbaren Befestigung des starren Volumens (103, 203) an den ersten Haltemitteln (101, 201) umfaßt.

5. Führungseinrichtung nach Anspruch 4,
dadurch gekennzeichnet, daß sie erste Mittel (126, 226) zur Regelung der Position der Befestigung des starren Volumens (103, 203) an den ersten Haltemitteln (101, 201) umfaßt.

6. Führungseinrichtung nach einem der Ansprüche 1 bis 5,
dadurch gekennzeichnet, daß sie mindestens zwei starre Volumina (103, 105) umfaßt, deren jeweilige zweite seitliche Abschnitte (119, 124) einen ersten Winkel (α) größer als 0° und kleiner als 180° bilden, um zu gestatten, einen Schnitt von zumindest zwei Teilen einer Vereinigung gemäß einem zweiten Nebenwinkel des ersten Winkels (α) in einer einzigen Verlagerung des elektroportativen Geräts auszuführen.

7. Führungseinrichtung nach Anspruch 6,
dadurch gekennzeichnet, daß der erste Winkel (α) gleich 90° beträgt.

8. Führungseinrichtung nach einem der Ansprüche 1 bis 7,
dadurch gekennzeichnet, daß die Mittel zur seitlichen Führung eine Schiene (10, 110, 210) umfassen, die an dem oberen Abschnitt (22, 122, 222) des starren Volumens (3, 103, 203) angeordnet ist, welcher die zweiten Haltemittel trägt.

9. Führungseinrichtung nach einem der Ansprüche 1 bis 8,
dadurch gekennzeichnet, daß sie Klemmittel (14, 114, 214) umfaßt, um das zu schneidende Teil mit der Einrichtung auf starre, lösbare Weise zu verbinden.

10. Führungseinrichtung nach Anspruch 9,
dadurch gekennzeichnet, daß die Klemmittel (14, 114, 214) mit den Mitteln (10, 110, 210) zur seitlichen Führung fest verbunden sind.

11. Führungseinrichtung nach einem der Ansprüche 1 bis 10,
dadurch gekennzeichnet, daß sie zweite Regelungsmittel (8, 9, 108, 109, 208, 209) umfaßt, um die Mittel (10, 110, 210) zur seitlichen Führung zu positionieren, so daß die Schnittebene zumindest parallel und höchstens tangential zu einem Rand (21, 121, 221) der zweiten Haltemittel verläuft und außerhalb der ersten Haltemittel (1, 101, 201) angeordnet ist.

12. Führungseinrichtung nach einem der Ansprüche 1 bis 11,
dadurch gekennzeichnet, daß sie ein schräges Feld (16, 116, 216) umfaßt.
